# EUROPEAN PATENT APPLICATION

(11) **EP 4 808 184 A1**
(43) Date of publication of application: **16.09.2026**
(21) Application number: 23958232.3
(22) Date of filing: 07.11.2023
(51) Int. Cl.: H04W 16/14, H04W 24/02, H04W 48/18

(54) **TERMINAL, RADIO COMMUNICATION METHOD, AND BASE STATION**

(71) Applicant: NTT DOCOMO, INC., Tokyo 100-6150 (JP)
(72) Inventor: YOSHIOKA, Shohei, Tokyo 100-6150 (JP); SHICHIJO, Taichi, Tokyo 100-6150 (JP); SHIBAIKE, Naoya, Tokyo 100-6150 (JP); KURITA, Daisuke, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2023/040070
(87) International publication number: WO 2025/099827

(57) **Abstract**

A terminal according to one aspect of the present disclosure includes: a receiving section that receives at least one of a first configuration common to a plurality of operators and a second configuration dedicated to an operator; and a control section that controls at least one of operation related to radio link monitoring and operation related to radio link failure that use a first cell in which a frequency resource is shared between a plurality of operators, based on at least one of the first configuration and the second configuration. According to one aspect of the present disclosure, it is possible to appropriately perform measurement/report using a shared resource.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For a future radio communication system, it is studied that a plurality of operators share a site/resource and the like for the purpose of increasing the use efficiency of frequency bands (existing frequency bands and new high frequency bands).

However, how to perform operation related to measurement/report when a plurality of operators share a resource has not been sufficiently studied. Unless such a study is sufficient, each operator cannot perform operation of flexible communication by each operator, which may cause suppression of improvement in communication quality.

Thus, an object of the present disclosure is to provide a terminal, a radio communication method, and a base station that can appropriately perform measurement/report using a shared resource.

### Solution to Problem

A terminal according to one aspect of the present disclosure includes: a receiving section that receives at least one of a first configuration common to a plurality of operators and a second configuration dedicated to an operator; and a control section that controls at least one of operation related to radio link monitoring and operation related to radio link failure that use a first cell in which a frequency resource is shared between a plurality of operators, based on at least one of the first configuration and the second configuration.

### Advantageous Effects of Invention

According to one aspect of the present disclosure, it is possible to appropriately perform measurement/report using a shared resource.

### Brief Description of Drawings

[FIG. 1] FIG. 1A and FIG. 1B are diagrams to show an example of cell assignment and handover.
[FIG. 2] FIG. 2 is a diagram to show an example of a cell connection and handover procedure.
[FIG. 3] FIG. 3A to FIG. 3D are diagrams to show examples of a scenario of sharing.
[FIG. 4] FIG. 4A to FIG. 4C are diagrams to show examples of shared resources.
[FIG. 5] FIG. 5 is a diagram to show an example of handover according to a fourth embodiment.
[FIG. 6] FIG. 6 is a diagram showing an example of a signal for measurement in a sixth embodiment.
[FIG. 7] FIG. 7 is a diagram to show an example of a schematic structure of a radio communication system according to one embodiment.
[FIG. 8] FIG. 8 is a diagram to show an example of a structure of a base station according to one embodiment.
[FIG. 9] FIG. 9 is a diagram to show an example of a structure of a user terminal according to one embodiment.
[FIG. 10] FIG. 10 is a diagram to show an example of a hardware structure of the base station and the user terminal according to one embodiment.
[FIG. 11] FIG. 11 is a diagram to show an example of a vehicle according to one embodiment.

### Description of Embodiments

### (5G-NR Measurement/Report)

In existing 5G NR, a synchronization signal block (SSB (synchronization signal (SS)/physical broadcast channel (PBCH) block)) and a channel state information reference signal (CSI-RS) are used as signals for measurement.

In mobility and handover, measurement is performed to appropriately select a cell/frequency to connect to/camp on.

More specifically, in accordance with movement of a terminal (which may be referred to as a user terminal or user equipment (UE))/change in surrounding environment, measurement is performed for handover and addition/deletion of connection to a secondary cell group (SCG)/SCell in a state where an RRC connection is established (RRC_CONNECTED mode) and measurement is performed for cell selection/re-selection in a state where an RRC connection is not established (RRC_IDLE/INACTIVE mode).

The UE reports measurement information necessary for selection/addition/deletion of a connection-destination cell and the like, to a network (NW, for example, base station).

The report may be performed periodically or may be performed based on the occurrence of an event.

For example, the UE may periodically report a measurement result, based on a configuration (for example, PeriodicalReportConfig) from the NW. For example, the UE may report a measurement result, based on the occurrence of an event configured by the NW.

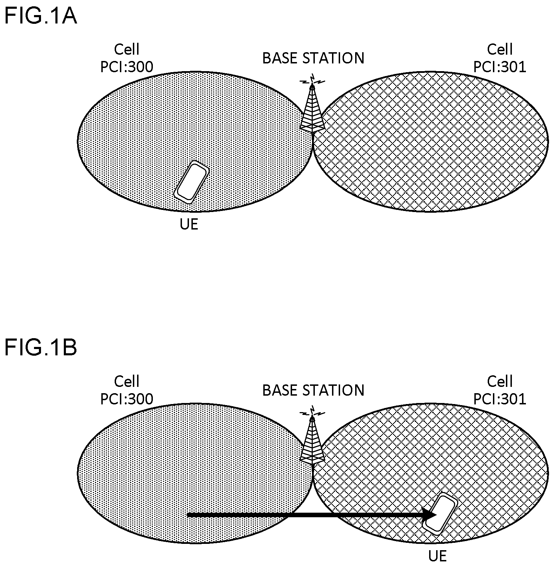

In an existing communication system, the UE is connected to one cell (RRC connection) and is assigned a physical cell ID (PCI) of the cell (see FIG. 1A).

Even after the UE is connected to one cell, the UE measures a signal of another cell and switches the cell/base station to connect to, in accordance with at least one of variations in radio quality and movement of the UE (see FIG. 1B). In the present disclosure, such operation/procedure may be referred to as handover.

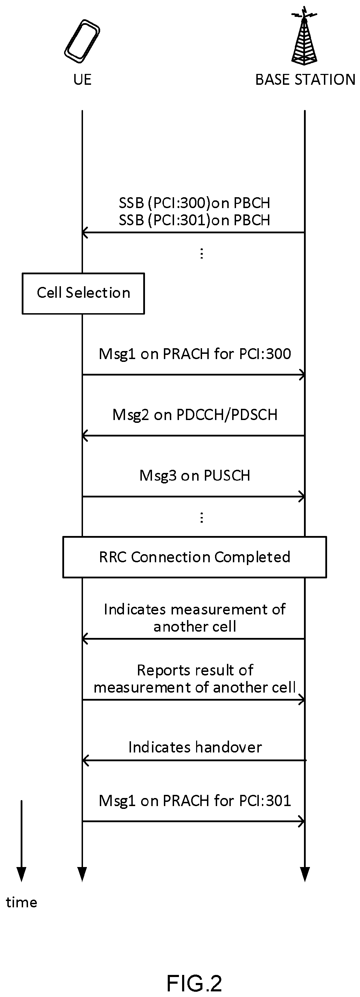

FIG. 2 is a diagram to show an example of a cell connection and handover procedure. In the example shown in FIG. 2, the UE first receives SSBs (SS/PBCH blocks) from two cells (cell corresponding to PCI:300 and cell corresponding to PCI:301), and selects one cell (cell of PCI:300 in the example shown in FIG. 2) as a connection cell, based on the SSBs (cell selection).

Next, the UE performs a random access procedure (transmission of message 1, reception of message 2, transmission of message 3, and the like) for the cell of PCI:300, and completes RRC connection to the cell of PCI:300. In the cell selection/connection, the UE is notified of a semi-static configuration parameter (RRC parameter) to be used for communication with a connection-destination cell.

Meanwhile, in handover, first, the UE receives a measurement indication (RRC parameter) of another cell from the base station, and reports a measurement result of the other cell based on the indication. Next, the UE receives a handover indication (RRC parameter) and performs a random access procedure to a handover destination (cell of PCI:301 in the example shown in FIG. 2).

In the existing communication system, measurement/report is also performed in the following radio link monitoring (RLM)/radio link failure (RLF).

### (RLM/RLF)

In existing 5G NR, communication is performed by using beamforming (Beam Forming (BF)). In environment using BF, it is susceptible to interference from an obstruction and thus assumed that radio link quality deteriorates.

Due to such deterioration of the radio link quality, RLF may occur frequently. When RLF occurs, re-establishment of RRC connection is needed. Hence, frequent occurrence of RLF may cause deterioration of system throughput. To address this, RLM has been introduced.

In RLM, measurement is performed by using a reference signal for measuring radio link quality in RLM (also referred to as a reference signal for RLM, a RLM-RS (Radio Link Monitoring-Reference Signal), and the like). For the RLM-RS, an SSB and a CSI-RS are used, for example.

When radio link quality measured based on at least one of configured RLM-RSs (RLM-RS resources) exceeds a certain threshold Qᵢₙ for a specific period (during T_{Evaluate_in}), the UE may determine that radio link is in IS (In-Sync, synchronized state).

When radio link quality measured based on at least one of configured RLM-RSs (RLM-RS resources) is lower than a certain threshold Qₒᵤₜ for a specific period (during T_{Evaluate_out}), the UE may determine that radio link is in OOS (Out-Of-Sync, out of synchronization).

Note that the UE does not perform synchronization report in a period (interval) other than IS and OOS.

In RLM, IS and/or OOS (IS/OOS) may be indicated by the physical layer to a higher layer (for example, the MAC layer, the RRC layer, or the like) in the UE, or RLF may be determined based on the indication of the IS/OOS in the UE.

To be more specific, when the higher layer (for example, the RRC layer) in the UE receives an OOS indication from a lower layer (for example, the L1 or physical layer) of a specific cell successively a certain number of times, the UE starts a timer for RLF detection (detection timer, timer for RLF detection). Note that, since re-establishment of RRC connection is initiated when RLF is detected, the timer for detection may be referred to as a timer for initiating re-establishment of RRC connection or the like.

When the UE receives an IS indication from the lower layer successively a specific number of times during the operation of the timer for detection, the UE may stop the timer for detection. When the timer for detection expires, the UE may detect RLF. When the timer for detection expires, the user terminal may initiate an RRC connection re-establishment procedure.

Note that the timer for RLF detection may be referred to as a timer T310. The number of successive reception times of an OOS indication (or a counter indicating the number of successive reception times), which is a condition for starting the timer for detection, may be referred to as N310 (or a counter N310). The number of successive reception times of an IS indication (or a counter indicating the number of successive reception times), which is a condition for stopping the timer for detection, may be referred to as N311 (or a counter N311).

### (Sharing among Multiple MNOs)

For 6G, several requirements below are under study.
- Ultra wideband communication.
- Mission critical communication.
- Ultra massive connection.
- Universal coverage.
- Intelligent connection.
- Ubiquitous sensing.
- New use case.

In addition to the above goals, several new concepts can be set as goals.
- Extensible (for example, ensuring more prospects).
- Customizable (for example, facilitating operation).
- Sustainable (for example, reducing cost, increasing robustness).

For reduction of deployment costs of base stations, the following factors of sharing among mobile network operators (MNOs) may be studied for operation in a licensed spectrum.

- Existing sharing from LTE (equipment sharing). Core network sharing (gateway core network, GWCN, multi-operator core network, MOCN). Different operators share a cell to thereby be able to assign different PLMN IDs to different operators.
- RAN sharing (multi-operator RAN, MORAN). Different operators share base station hardware to thereby be able to assign different cells to different operators.
- Site sharing. Different operators share a site to thereby be able to assign different base stations to different operators.
- Spectrum Sharing.

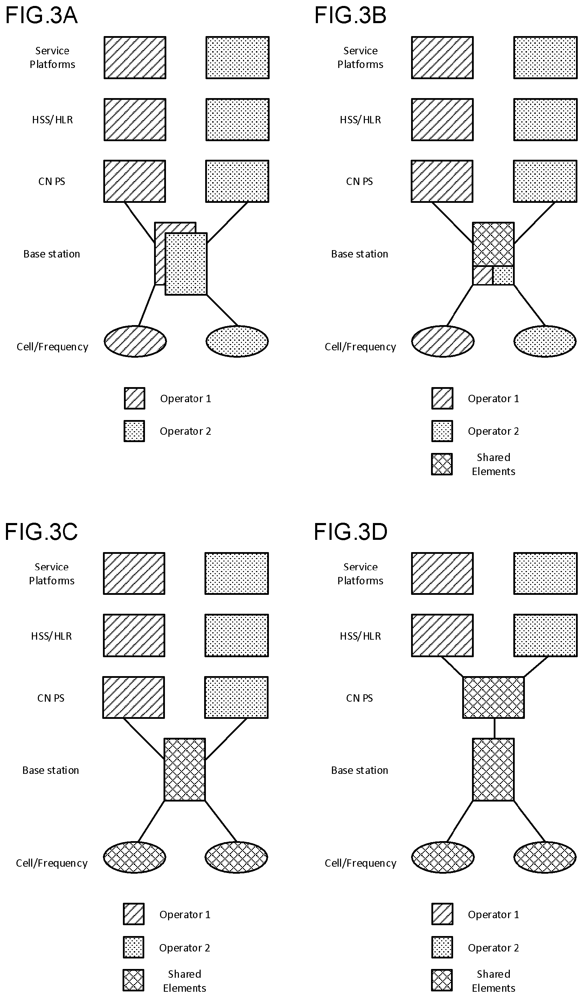

FIG. 3A to FIG. 3D are diagrams to show examples of a scenario of sharing.

FIG. 3A shows an example of site sharing. As shown in FIG. 3A, in the site sharing, an antenna site is shared by a plurality of operators. Meanwhile, service platforms, an HSS (Home Subscriber Server)/HLR (Home Location Register), core network (CN) packet switching (PS), a base station, and a cell/frequency are independent for each of a plurality of service providers.

FIG. 3B shows an example of an MORAN (Multi Operator RAN). As shown in FIG. 3B, in the MORAN, a plurality of operators share a part of a base station (for example, the hardware of the base station) in addition to antenna sites. Meanwhile, a service platform, an HSS/HLR, CN PS, the other part of the base station (for example, the software of the base station), and a cell/frequency are independent for each of a plurality of operators.

FIG. 3C shows an example of an MOCN (Multi Operator Core Network). As shown in FIG. 3C, in MOCN, multiple operators share a base station and a cell/frequency. Meanwhile, a service platform, an HSS/HLR, and CN PS are independent for each of a plurality of operators.

FIG. 3D shows an example of a GWCN (Gateway Core Network). As shown in FIG. 3D, in GWCN, a plurality of operators share CN PS, a base stations, and a cell/frequency. Meanwhile, a service platform and an HSS/HLR are independent for each of the plurality of operators.

For example, in MOCN/GWCN, since a cell is shared by a plurality of operators, it is desirable that a configuration can be changed for each operator (for example, for each ID related to a public land mobile network (PLMN) (PLMN ID)).

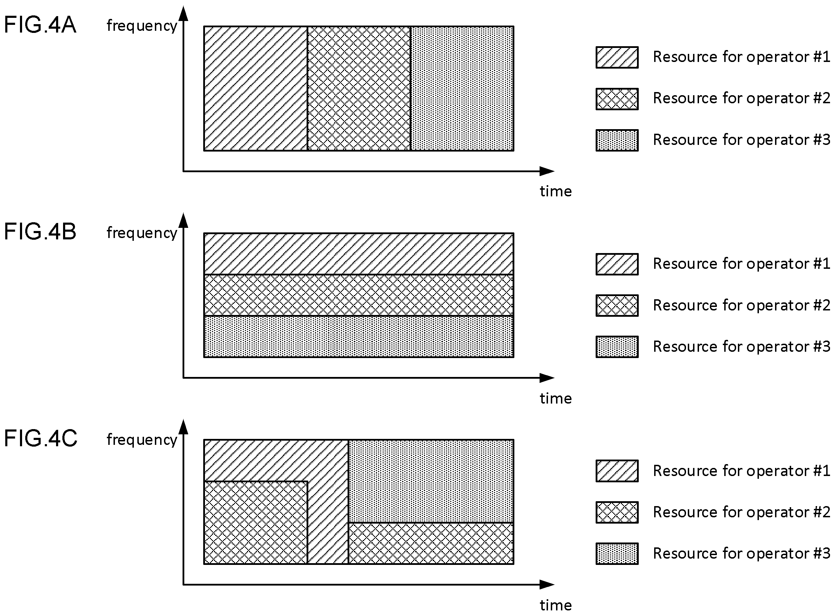

As described above, it is not studied sufficiently how to share a base station apparatus/resource when the base station apparatus/resource is shared between a plurality of operators. For example, as a shared frequency resource, a case where resources for the respective operators are time division multiplexed (TDMed) (see FIG. 4A), a case where resources for the respective operators are frequency division multiplexed (FDMed) (see FIG. 4B), and a case where resources for the respective operator are TDMed and FDMed (which may be referred to as flexible TDM/FDM, see FIG. 4C) are conceivable.

However, when control is performed such that time/frequency resources are orthogonal for each operator in the shared frequency resource, there is a concern that frequency use efficiency and energy saving efficiency on the network side are reduced.

For a case where a shared frequency resource is used, it has been studied that a signal common to a plurality of UEs is used for measurement/report related to cell connection and handover, but corresponding UE operation has not been sufficiently studied.

Hence, unless the configuration for the specific UE can be changed between a plurality of operators, it is not possible for each operator to operate flexible communication and thus not possible to determine a resource related to flexible and appropriate initial access, which may suppress improvement of communication quality.

Thus, the inventors of the present invention came up with the idea of a method of using a shared resource in order to efficiently perform station deployment/frequency utilization by resource sharing.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, a_{b}, a_b, and a notation in which b is attached to the lower right of a may be interchangeably interpreted. In the present disclosure, a^{c}, a^c, and a notation in which c is attached to the upper right of a may be interchangeably interpreted. In the present disclosure, a_{b}^{c}, a_b^c, and a notation in which b is attached to the lower right of a and c is attached to the upper right of a may be interchangeably interpreted. In the present disclosure, ceil(x), the ceiling function, and ceiling may be interchangeably interpreted. In the present disclosure, floor(x), the floor function, and floor may be interchangeably interpreted. In the present disclosure, sqrt(x) and a square root (root) may be interchangeably interpreted. In the present disclosure, x" may be expressed by attaching " over x or may be referred to as x-tilde. In the present disclosure, x⁻ may be expressed by attaching - over x or may be referred to as x-bar.

In the present disclosure, an MNO, an operator, a service provider, a PLMN, an operator policy, a configuration for each service provider, a configuration for each operator, and the like may be interchangeably interpreted. In the present disclosure, an MNO, an NW, a base station, a central unit (CU), a distributed unit (DU), a radio unit (RU), and a TRP may be interchangeably interpreted.

In the present disclosure, a PLMN ID, an ID related to a PLMN, an ID related to an operator, a PLMN, one or more pieces of information identified by a PLMN, a PLMN set, an ID/information/parameter used to identify an operator/MNO/service provider, and the like may be interchangeably interpreted.

In the present disclosure, system information (SI), a part of system information, partial system information, an MIB, an SIB, an SIB used for initial access, SIB1, SIB X (x is any number), a downlink shared channel carrying system information, and a PDSCH carrying system information may be interchangeably interpreted.

In the present disclosure, cell selection, cell re-selection, cell connection, cell reconnection, handover, cell switching, and the like may be interchangeably interpreted.

### (Radio Communication Method)

Hereinafter, in the present disclosure, a cell in which a frequency resource is shared (sharing is performed) between a plurality of operators is referred to as "cell x" for convenience, but this does not indicate a unique name of the cell.

In cell x, a UE to connect to (or connected to) cell x may perform measurement/report of a signal by using a specific method. The UE may perform operation related to at least one of maintaining/termination of the connection to the cell, reconnection to the cell, and handover, based on the measurement/report.

Hereinafter, in the present disclosure, a PLMN ID will be described as an example of an ID for identifying an operator, but the name of the ID is not limited thereto.

Hereinafter, each embodiment of the present disclosure may be applied based on the assumption that the UE attempts to connect to a given operator (cell corresponding thereto)/PLMN. In the present disclosure, the operator/PLMN is referred to as "PLMN #A" for convenience.

In the present disclosure, "common to (a plurality of) operators" may mean that the operators are not distinguished, or may mean that use by the UE is possible regardless of operator.

In the present disclosure, "on or after" and "after" may be interchangeably interpreted.

An initial/random access procedure in each embodiment of the present disclosure may include a specific number of steps.

The initial/random access procedure in each embodiment of the present disclosure may be, for example, a 4-step random access procedure (for example, a random access procedure using message 1 (PRACH), message 2 (RAR), message 3, and message 4), a 2-step random access procedure (for example, a random access procedure using message A and message B), or an N-step random access procedure (N is any number). The initial access procedure in each embodiment of the present disclosure may be partially different from an existing initial/random access procedure (defined in Rel. 18 or previous versions).

A received DL channel/signal may include a reference signal (for example, a DMRS/CSI-RS/TRS/PTRS).

A DL channel/signal in the present disclosure may be interpreted as any DL channel/signal (for example, a PDCCH/PDSCH), and a UL channel/signal in the present disclosure may be interpreted as any UL channel/signal (for example, a PUCCH/PUSCH).

In the present disclosure, a (plurality of) UE common signal(s) may mean a signal common to a plurality of UEs or a signal based on a common resource configuration. In the present disclosure, a (plurality of) UE common signal(s) may be based on whether the UE common signal(s) is common to service providers or may be unrelated to whether the UE common signal(s) is common to service providers.

In the present disclosure, the description of PLMN-common/PLMN-dedicated/UE-common/UE-dedicated may mean a plurality of PLMN-common/PLMN-dedicated/UE-common/UE-dedicated configurations/resources/signals, respectively.

In the present disclosure, a PLMN-common configuration/resource/signal may mean a configuration/resource/signal not depending on PLMN ID (not associated with any PLMN ID) or may mean a configuration/resource/signal associated with a plurality of PLMN IDs.

In the present disclosure, a PLMN-common configuration/resource/signal may mean a configuration/resource/signal associated with one PLMN ID.

Hereinafter, first to third embodiments each relate to a method of configuring measurement/report in a UE to connect to/connected to cell x.

Modes/operations corresponding to the first to third embodiments may be defined. The UE may determine switching/application/operation of at least two modes/operations corresponding to the first to third embodiments, based on a specific configuration/indication.

The first to third embodiments below may be separately applied to maintaining of connection to a cell, termination of the connection to the cell, reconnection to the cell, and handover. For example, different embodiments may be applied to the termination of the connection to the cell, the reconnection to the cell, and the handover.

Although this is merely an example, the first embodiment below may be applied to the maintaining of the connection to the cell, the termination of the connection to the cell, and the reconnection to the cell, and the second or third embodiment below may be applied to the handover, for example.

Although the first to third embodiments below are mainly described with an example of handover of a cell, the embodiments are also appropriately applicable to RLM/RLF.

### <First Embodiment>

A UE may perform measurement/report, based on a specific configuration/indication related to measurement/report.

For example, the specific configuration/indication may be a PLMN-common configuration/indication. The specific configuration/indication may be referred to as a first configuration/indication.

The specific configuration/indication may be at least one of a configuration/indication by higher layer signaling (for example, RRC/MAC CE), an indication by DCI, and a configuration/indication based on corresponding UE capability information.

According to the first embodiment, it is possible to perform configuration/indication related to measurement/report commonly for a plurality of PLMNs.

### <Second Embodiment>

A UE may perform measurement/report, based on a specific configuration/indication related to measurement/report.

For example, the specific configuration/indication may be a PLMN-dedicated configuration/indication. The specific configuration/indication may be referred to as a second configuration/indication.

The specific configuration/indication may be at least one of a configuration/indication by higher layer signaling (for example, RRC/MAC CE), an indication by DCI, and a configuration/indication based on corresponding UE capability information.

According to the second embodiment, it is possible to perform configuration/indication related to measurement/report separately for each PLMN.

### <Third Embodiment>

The first embodiment and the second embodiment above may be applied in combination.

For example, a UE may perform measurement, based on the first configuration/indication and the second configuration/indication. The UE may perform operation related to at least one of maintaining of connection to a cell, termination of the connection to the cell, reconnection to the cell, and handover, based on the specification.

A measurement result based on the first configuration/indication and a measurement results based on the second configuration/indication may be treated as measurement result not being distinguished from each other, in operation related to at least one of maintaining of connection to a cell, termination of the connection to the cell, reconnection to the cell, and handover.

Either a measurement result based on the first configuration/indication or a measurement result based on the second configuration/indication may be preferentially used in operation related to at least one of maintaining of connection to a cell, termination of the connection to the cell, reconnection to the cell, and handover.

For example, when measurement/report based on the first configuration/indication and measurement/report based on the second configuration/indication satisfy a specific condition, the UE may prioritize the measurement/report based on the first configuration/indication or the measurement/report based on the second configuration/indication and perform operation related to at least one of maintaining of connection to a cell, termination of the connection to the cell, reconnection to the cell, and handover.

The first configuration/indication and the second configuration/indication may be defined as different information elements.

The first configuration/indication and the second configuration/indication may refer to a common/different parameters.

According to the third embodiment, it is possible to appropriately configure/indicate measurement/report common to a plurality of PLMNs and configure/indicate measurement/report separately for each PLMN.

### <Configuration/Indication Related to Measurement/Report>

Hereinafter, contents of a configuration/indication related to measurement/report in the present disclosure will be described.

The configuration/indication related to measurement/report may be (may include) at least one of information on RLM, information on RRM (Radio Resource Management), information on CSI-RS measurement, information on conditional handover (CHO), information on DAPS handover (Dual active protocol stack based handover), and information on LTM (L1L2-triggered mobility).

The information on RLM may be, for example, at least one of information on a threshold of IS/OOS and information on a reference signal used for RLM.

The information on RRM may be, for example, at least one of information on a measurement-target frequency/band/resource, information on an event that triggers measurement report, information on periodicity of the measurement report, and information on a period of the measurement report.

The information on CSI-RS measurement may be, for example, at least one of information on a time/frequency resource of a CSI-RS, information on resource mapping of a CSI-RS, information on a resource for performing the CSI-RS measurement, and information on timing/resource for performing CSI-RS measurement result report.

The information on CHO may be, for example, at least one of information on one or more handover candidates and information on a condition/event related to the CHO. For example, the UE may be configured with one or more handover candidates and attempt, when a certain condition is met, to perform handover to a specific cell within the candidates.

The configuration related to the DAPS handover may be, for example, information on simultaneous connection to a base station before the handover and a base station after the handover.

The information on LTM may be, for example, information on handover by an L1/L2 signal.

In this way, by defining a configuration/instruction related to measurement/report, it is possible to appropriately control various operations related to handover/RLM/RLF.

### <Fourth Embodiment>

A fourth embodiment relates to operation of handover from cell x.

Hereinafter, in the present disclosure, a cell in which a frequency resource is shared between a plurality of operators, the cell being different from cell x, is referred to as "cell y" for convenience. A cell in which a frequency resource is not shared between a plurality of operators is referred to as "cell z" for convenience.

In the present disclosure, handover/cell selection/cell re-selection using cell x may include at least one of handover/cell selection/cell re-selection from cell x to cell y/cell z and handover/cell selection/cell re-selection from cell z to cell x.

The UE may be notified of whether or not a handover destination/handover candidate is a cell in which a frequency resource is shared between a plurality of operators (whether the handover destination/handover candidate is cell y or cell z).

The UE may preferentially report a measurement result related to a specific cell. The UE need not include a measurement result related to a cell other than the specific cell, in a report target. The UE may preferentially determine the specific cell as a handover destination.

Option 4a: For example, the UE may preferentially report a measurement result related to cell y. The UE need not include a measurement result related to cell z in a report target. The UE may preferentially determine cell y as a handover destination.

Option 4b: For example, the UE may preferentially report a measurement result related to cell z. The UE need not include a measurement result on cell y in a report target. The UE may preferentially determine cell z as a handover destination.

The UE may be configured with/indicated with/notified of which one of options 4a and 4b to apply (or whether cells y and z are not distinguished).

When the UE is handed over to cell y, the UE may receive a PLMN-common/PLMN-dedicated configuration of cell y in cell x in advance. The UE may perform at least one of handover to cell y and communication in cell y, based on the configuration.

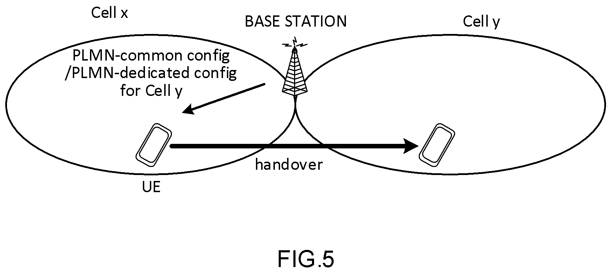

FIG. 5 is a diagram to show an example of handover according to the fourth embodiment. In the example shown in FIG. 5, the UE performs handover from cell x to cell y. In the example shown in FIG. 5, the UE receives a PLMN-common/PLMN-dedicated configuration of cell y, in cell x in advance, and performs handover to cell y, based on the configuration.

When the UE is handed over to cell y, and cell x and cell y are in the same frequency range/band, the UE may assume/expect/determine that the PLMN-common configurations of cell x and cell y are in common.

In this case, the UE may receive a PLMN-dedicated configuration of cell y in advance. The UE may perform at least one of handover to cell y and communication in cell y, based on at least one of the configuration, the PLMN-common configuration, and a handover indication.

According to the fourth embodiment, operation of handover from cell x can be appropriately defined/performed.

### <Fifth Embodiment>

A fifth embodiment relates to operation of handover to cell x (for example, from cell z).

The UE may be notified of whether or not a handover destination/handover candidate is a cell in which a frequency resource is shared between a plurality of operators (whether or not the handover destination/handover candidate is cell x).

The UE may report, to an NW, whether or not the UE can connect to a cell in which a frequency resource is shared between a plurality of operators. The UE that does not report that the UE can connect to the cell may be determined not to be possible to connect to the cell.

In the present disclosure, the report on whether or not to be able to connect a cell in which a frequency resource is shared between a plurality of operators may be reported as specific UE capability information.

The capability information indicating that connection to a cell in which a frequency resource is shared between a plurality of operators is possible may be capability information in common with or different from capability information indicating that handover to a cell in which a frequency resource is shared between a plurality of operators is possible.

The UE that has reported that connection to the cell is possible may receive, in advance, at least one of a PLMN-common configuration and a PLMN-dedicated configuration of cell x, in cell z. The UE may perform at least one of handover to cell x and communication in cell x, based on at least one of the configuration and a handover indication.

### <<Variations of Fifth Embodiment>>

For cell x being a handover destination/handover candidate, the UE may be notified of the PLMN-common/PLMN-dedicated configuration for cell x.

The UE may report, to the NW, whether or not the UE can connect to the cell (cell x) to which the configuration is applied. The UE that does not report that the UE can connect to the cell may be determined not to be able to connect to the cell.

The UE that has reported that the UE can connect to the cell may perform at least one of handover to cell x and communication in cell x, based on at least one of the configuration and a handover indication.

According to the fifth embodiment, operation of handover to cell x can be appropriately defined/performed.

### <Sixth Embodiment>

A sixth embodiment relates to operation of RLM/RLF in cell x. The present embodiment may be applied to a case where a UE is connected to cell x.

The UE may determine to perform cell re-selection upon RLF detection.

The UE may operate to preferentially connect to a specific cell in the cell re-selection.

The specific cell may be, for example, a cell in which a frequency resource is shared between a plurality of operators.

In this case, for example, the UE may operate to preferentially connect to a cell being in common with cell x in terms of a PLMN-common configuration.

With this configuration, it is possible to reduce the number of configurations necessary for cell re-selection and hence expected that overhead is reduced/resource use efficiency is increased.

The specific cell may be, for example, a cell in which a frequency resource is not shared between a plurality of operators.

With this configuration, even in a case where connection to cell x is not possible, connection to non-cell x can be secured.

The UE may determine a signal to use for measurement, based on specific timing related to RLM operation.

For example, the signals to be used for measurement during IS and during OOS may be determined separately.

For example, different signals may be used for measurement during IS and during OOS. For example, the signal to be used for measurement during IS may be a signal (for example, a PLMN-common (or PLMN-dedicated) CSI-RS/SSB) based on a configuration described in the first (or second) embodiment, and the signal to be used for measurement during OOS may be a signal (for example, a PLMN-dedicated (or PLMN-common) CSI-RS/SSB) based on the configuration described in the second (or first) embodiment.

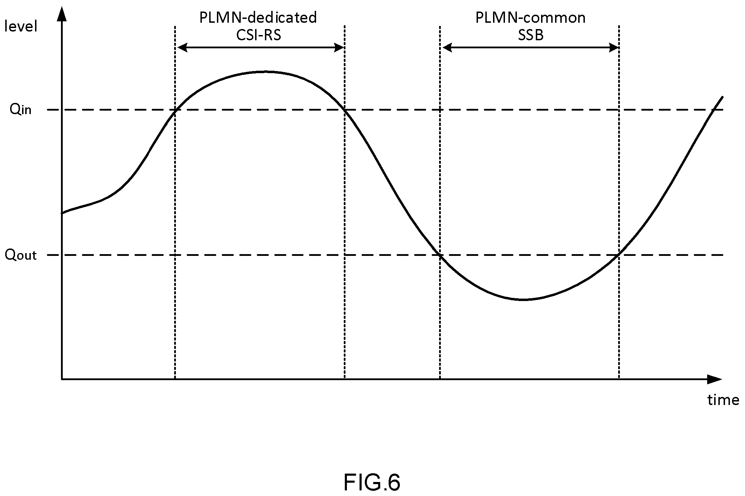

FIG. 6 is a diagram showing an example of a signal for measurement in the sixth embodiment. In the example shown in FIG. 6, a UE uses a PLMN-dedicated CSI-RS as a signal for measurement during IS (period in which radio link quality exceeds a threshold Qᵢₙ) while using a PLMN-common SSB as a signal for measurement during OOS (period in which radio link quality is lower than a threshold Qₒᵤₜ).

By configuring to perform measurement using different signals during IS and during OOS as described above, it is possible to secure more flexible and quick synchronization.

When IS is detected after OOS detection, the UE may perform RLM operation by assuming that operation related to RLM is different from that before the OOS detection. In this case, after the elapse of a specific period starting from specific timing, the UE may determine to return to the operation before the OOS detection.

For example, the UE may use a PLMN-common (or PLMN-dedicated) CSI-RS/SSB for the measurement for RLM, before OOS detection, while using a PLMN-dedicated (or PLMN-common) CSI-RS/SSB for measurement for RLM, after OOS detection.

According to the sixth embodiment above, it is possible to appropriately define/perform operation related to RLM/RLF in cell x.

### <Seventh Embodiment>

A seventh embodiment relates to specific handover (for example, CHO/DAPS handover/LTM) for cell x.

A specific cell may be included in candidates for the specific handover (for example, CHO).

The specific cell may be, for example, cell x/cell y.

The candidates for handover (for example, CHO) based on a specific configuration (in a specific configuration) may include only a specific cell.

For example, the candidates for handover (for example, CHO) in a PLMN-common configuration may include only cell x.

For example, the candidates for handover (for example, CHO) in a PLMN-dedicated configuration may include only cell y, or cell x and cell y.

Operation related to handover (for example, CHO) may be applied separately (for example, differently) at the time of handover from cell x to another cell and at the time of handover from cell y to another cell.

Specific handover (for example, DAPS handover) may be performed between cell x and cell y.

When the target (handover source/destination) of specific handover (for example, DAPS handover) is cell x, the other target may be only a specific cell (for example, cell z or cell y).

Operations related to handover (for example, DAPS handover) may be separately (for example, differently) applied at the time of handover from cell x to another cell and at the time of handover from cell y to another cell.

When the target (handover source/destination) of specific handover (for example, LTM) is cell x, the other target may be only a specific cell (for example, cell z or cell y).

Operation related to handover (for example, LTM) may be applied separately (for example, differently) at the time of handover from cell x to another cell and at the time of handover from cell y to another cell.

Application of each UE operation/handover operation for specific handover (CHO/DAPS handover/LTM) in the present embodiment may be determined based on capability information supported by the UE (may be different based on the capability information supported by the UE). The UE may report the UE capability information to an NW.

According to the seventh embodiment, even when specific handover is performed in at least one of a cell in which a frequency resource is shared between a plurality of operators and a cell in which a frequency resource is not shared between a plurality of operators, it is possible to appropriately define UE operation.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

The specific condition may indicate at least one of the following:
- operation is performed in FR3. FR3 may be the entire or a part of the range 7125 to 24250 MHz.
- operation is performed in FRx. FRx may be the entire or a part of a range higher than 71 GHz.

At least one of the above-described embodiments may be applied only to a UE that has reported a specific UE capability or that supports the specific UE capability.

The specific UE capability may indicate at least one of the following:
- supporting of specific processing/operation/control/information for at least one of the above embodiments.
- supporting of operation related to handover/RLM/RLF involving cell x.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

The specific UE capability may be defined as a mandatory function without UE capability signaling or may be defined as a mandatory function with UE capability signaling. The specific UE capability may be defined as an optional (selectable) function without UE capability signaling or may be defined as an optional function with UE capability signaling.

At least one of the above-described embodiments may be applied when the UE is configured/activated/triggered with specific information related to the above-described embodiment (or performance of the operation of the above-described embodiment) by higher layer signaling/physical layer signaling. The specific information may indicate at least one of the following:
- information indicating enabling/disabling of the operation of any of the above-described embodiments.
- RRC parameter for a specific release (for example, Rel. 18/19/20/21). The RRC parameter may have a name obtained by attaching "r18"/"r19"/"r20"/"r21" to the name of an existing RRC parameter.

When the UE does not support at least one of the specific UE capabilities above or is not configured with the specific information, operation of Rel. 15/16/17/18/19 may be applied, for example.

### (Supplementary Notes)

Regarding one embodiment of the present disclosure, the following supplementary notes of the invention will be given.

### {Supplementary Note 1-1}

A terminal including: a receiving section that receives at least one of a first configuration common to a plurality of operators and a second configuration dedicated to an operator; and a control section that controls handover operation using a first cell in which a frequency resource is shared between a plurality of operators, based on at least one of the first configuration and the second configuration.

### {Supplementary Note 1-2}

The terminal according to supplementary note 1-1, wherein the receiving section receives information indicating whether or not a handover candidate is the first cell.

### {Supplementary Note 1-3}

The terminal according to supplementary note 1-1 or 1-2, wherein the control section performs control to preferentially report a measurement result of a specific cell.

### {Supplementary Note 1-4}

The terminal according to any one of supplementary notes 1-1 to 1-3, wherein, when a handover candidate is the first cell, the receiving section receives, in a cell before handover, at least one of the first configuration related to the first cell and the second configuration related to the first cell.

### {Supplementary Note 2-1}

A terminal including: a receiving section that receives at least one of a first configuration common to a plurality of operators and a second configuration dedicated to an operator; and a control section that controls at least one of operation related to radio link monitoring and operation related to radio link failure that use a first cell in which a frequency resource is shared between a plurality of operators, based on at least one of the first configuration and the second configuration.

### {Supplementary Note 2-2}

The terminal according to supplementary note 2-1, wherein, when the radio link failure has occurred, the control section performs control to preferentially connect to the first cell.

### {Supplementary Note 2-3}

The terminal according to supplementary note 2-1 or 2-2, wherein, when the radio link failure has occurred, the control section performs control to preferentially connect to a second cell in which no frequency resource is shared between a plurality of operators.

### {Supplementary Note 2-4}

The terminal according to any one of supplementary notes 2-1 to 2-3, wherein the control section assumes that a signal for measurement to be used during In-Sync (IS) and a signal for measurement to be used during OOS (Out-Of-Sync) are different from each other.

### (Radio Communication System)

Hereinafter, a structure of a radio communication system according to one embodiment of the present disclosure will be described. In this radio communication system, the radio communication methods according to the respective embodiments of the present disclosure described above may be used alone or may be used in combination for communication.

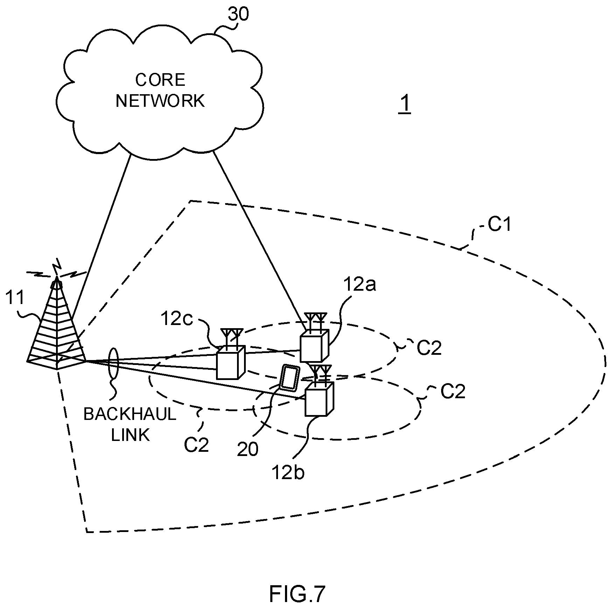

FIG. 7 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-dedicated reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-dedicated Reference Signal)."

### (Base Station)

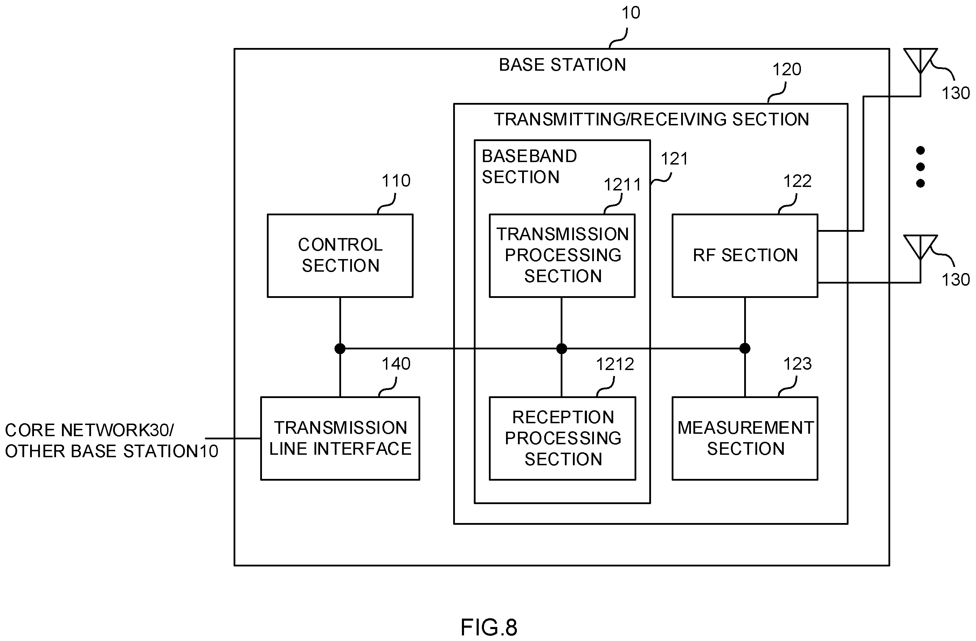

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit at least one of a first configuration common to a plurality of operators and a second configuration dedicated to an operator. The control section 110 may indicate handover operation using a first cell in which a frequency resource is shared between a plurality of operators, by using at least one of the first configuration and the second configuration (first to third embodiments).

The transmitting/receiving section 120 may transmit at least one of a first configuration common to a plurality of operators and a second configuration dedicated to an operator. The control section 110 may indicate at least one of operation related to radio link monitoring and operation related to radio link failure that use a first cell in which a frequency resource is shared between a plurality of operators, by using at least one of the first configuration and the second configuration (first to third embodiments).

### (User Terminal)

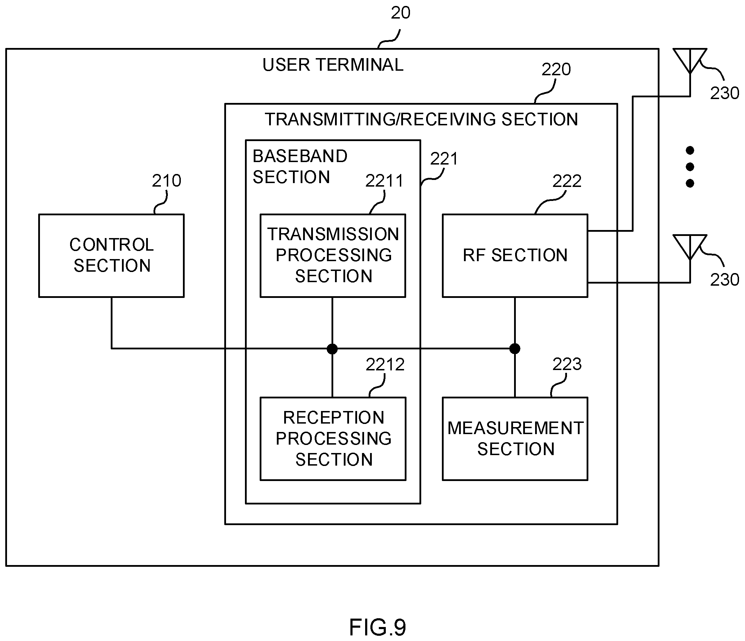

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of a first configuration common to a plurality of operators and a second configuration dedicated to an operator. The control section 210 may control handover operation using a first cell in which a frequency resource is shared between a plurality of operators, based on at least one of the first configuration and the second configuration (first to third embodiments).

The transmitting/receiving section 220 may receive information indicating whether or not a handover candidate is the first cell (fourth/fifth embodiment).

The control section 210 may perform control to preferentially report a measurement result of a specific cell (fourth embodiment).

When a handover candidate is the first cell, the transmitting/receiving section 220 may receive, in a cell before handover, at least one of the first configuration related to the first cell and the second configuration related to the first cell (fourth/fifth embodiment).

The transmitting/receiving section 220 may receive at least one of a first configuration common to a plurality of operators and a second configuration dedicated to an operator. The control section 210 may control at least one of operation related to radio link monitoring and operation related to radio link failure that use a first cell in which a frequency resource is shared between a plurality of operators, based on at least one of the first configuration and the second configuration (first to third embodiments).

When the radio link failure has occurred, the control section 210 may perform control to preferentially connect to the first cell (sixth embodiment).

When the radio link failure has occurred, the control section 210 may perform control to preferentially connect to a second cell in which no frequency resource is shared between a plurality of operators (sixth embodiment).

The control section 210 may assume that a signal for measurement to be used during In-Sync (IS) and a signal for measurement to be used during OOS (Out-Of-Sync) are different from each other (sixth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

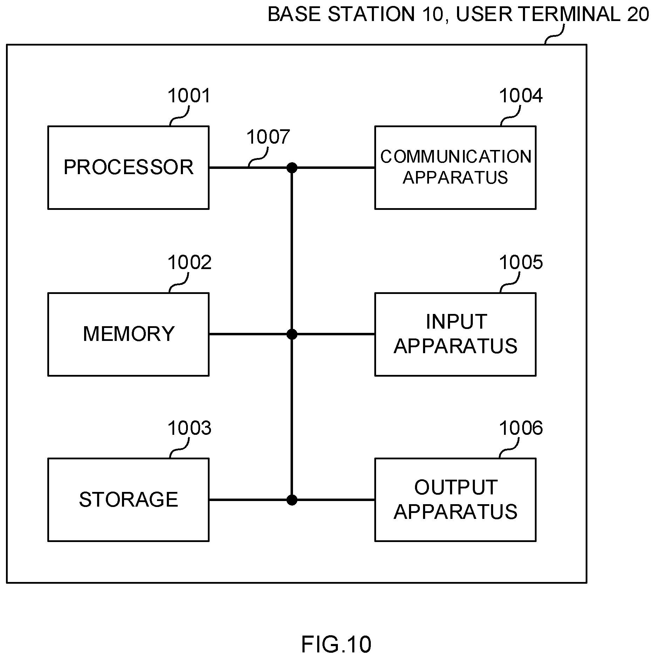

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

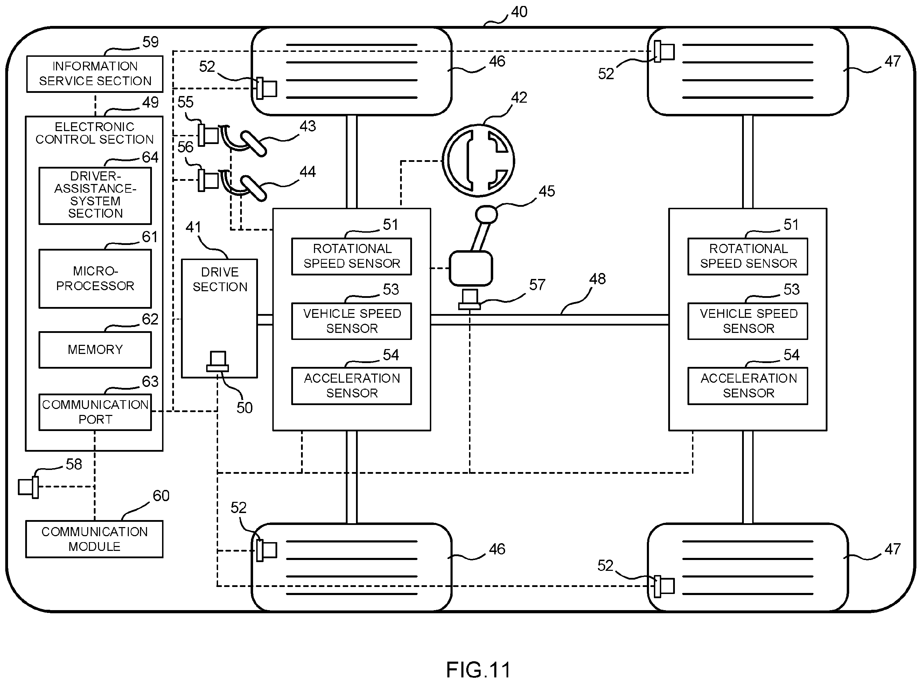

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives at least one of a first configuration common to a plurality of operators and a second configuration dedicated to an operator; and
a control section that controls at least one of operation related to radio link monitoring and operation related to radio link failure that use a first cell in which a frequency resource is shared between a plurality of operators, based on at least one of the first configuration and the second configuration.

2. The terminal according to claim 1, wherein
when the radio link failure has occurred, the control section performs control to preferentially connect to the first cell.

3. The terminal according to claim 1, wherein
when the radio link failure has occurred, the control section performs control to preferentially connect to a second cell in which no frequency resource is shared between a plurality of operators.

4. The terminal according to claim 1, wherein
the control section assumes that a signal for measurement to be used during In-Sync (IS) and a signal for measurement to be used during OOS (Out-Of-Sync) are different from each other.

5. A radio communication method for a terminal, the radio communication method comprising:
receiving at least one of a first configuration common to a plurality of operators and a second configuration dedicated to an operator; and
controlling at least one of operation related to radio link monitoring and operation related to radio link failure that use a first cell in which a frequency resource is shared between a plurality of operators, based on at least one of the first configuration and the second configuration.

6. A base station comprising:
a transmitting section that transmits at least one of a first configuration common to a plurality of operators and a second configuration dedicated to an operator; and
a control section that indicates at least one of operation related to radio link monitoring and operation related to radio link failure that use a first cell in which a frequency resource is shared between a plurality of operators, by using at least one of the first configuration and the second configuration.
